# EUROPÄISCHE PATENTANMELDUNG

(11) **EP 2 315 100 A1**
(43) Veröffentlichungstag der Anmeldung: **27.04.2011**
(21) Anmeldenummer: 09012514.7
(22) Anmeldetag: 02.10.2009
(51) Int. Cl.: G06F 1/30

(54) **Netzteil für ein Computersystem, insbesondere für ein Computersystem eines Boniersystems**

(71) Anmelder: Orderman GmbH, 5023 Salzburg (AT)
(72) Erfinder: Feichter David, 5400 Hallein (AT)
(74) Vertreter: Karakatsanis, Georgios

(57) **Zusammenfassung**

Es wird ein Netzteil (1) für ein Computersystem (2), insbesondere für ein Computersystem (2) eines Boniersystems vorgeschlagen, welches eine Mehrzahl von Ausgängen (7,6, 7, 8) aufweist, um unterschiedliche Bauteile des Computersystems (2) gleichzeitig mit Strom zu versorgen, wobei in das Netzteil (1) ein Netzfilter (9) zum Vermeiden von Spannungseinbrüchen und Spannungsspitzen und ein Modul (10) zur unterbrechungsfreien Spannungsversorgung (USV) integriert sind.

## Beschreibung

Die vorliegende Erfindung bezieht sich auf ein Netzteil für ein Computersystem, insbesondere für ein Computersystem eines Boniersystems gemäß dem Oberbegriff des Patentanspruchs 1.

Computersysteme benötigen Netzteile, da sie zu deren Betrieb Spannungen und Ströme benötigen, die von den vom Stromnetz bereitgestellten Spannungen und Strömen abweichen.

Aus dem Stand der Technik sind Netzteile bekannt, die als Einbau-Netzteile ausgeführt sind, welche in den jeweiligen Computer integriert werden. Dies resultiert zwar in dem Vorteil, dass eine kompakte Bauweise ohne zusätzliche externe Bauteile erzielt wird; als nachteilig erweist sich jedoch hierbei die Tatsache, dass durch die Integration eines Einbau-Netzteils die Sicherheitsanforderungen an den Computer, beispielsweise hinsichtlich Berührungsschutz, oder Überspannungsfestigkeit höher sind als bei einem Computer, welcher von einem externen Netzteil mit Strom versorgt wird.

Des weiteren weisen Computersysteme umfassend ein Einbau-Netzteil den Nachteil auf, dass ein Lüfter benötigt wird, um die von dem Einbau-Netzteil erzeugte Abwärme abzutransportieren, was in einer unangenehmen Geräuschentwicklung resultiert. Des weiteren führt der Einsatz von Lüftern im betreffenden Arbeitsumfeld zu einer maßgeblichen Reduzierung der Zuverlässigkeit, da Lüfter in der Regel zusätzlichen Staub und Schmutz in das Computersystem transportieren, was zu einem Ausfall der Lüfter und somit zu einer Reduzierung bzw. zu einem Ausfall der Kühlung und folglich zu einer Überhitzung führt, die einen Systemstillstand zur Folge hat. Für den Fall von Boniersystemen in Restaurants kann beispielsweise durch die Lüfter Fett in das entsprechende Computersystem transportiert werden.

Des weiteren erfordert der Einbau eines Einbau-Netzteils relativ viel Bauraum, was sich auch hinsichtlich des Designs des Computersystems als nachteilig erweisen kann.

Aus diesen Gründen weisen insbesondere Computersysteme von Boniersystemen, beispielsweise von Funkboniersystemen, externe Netzteile auf. Dadurch werden die erwähnten Nachteile von Einbau-Netzteilen vermieden, wobei eine kompakte Bauform realisiert wird, die sich aufgrund der beengten Platzverhältnisse als besonders vorteilhaft erweist.

Ferner fordern weitere Komponenten von Computersystemen, wie beispielsweise Bildschirme, Router und für den Fall von Funltboniersystemen Ladestationen für Mobilteile, Basisstationen und Drucker externe Netzgeräte, was in nachteiliger Weise in einer Mehrzahl von externen Netzgeräten resultiert, die zum einen relativ viel Platz erfordern und zum anderen durch die Mehrzahl von Stromkabeln in einer unübersichtlichen Gestaltung des Computersystems resultieren.

Der vorliegenden Erfindung liegt die Aufgabe zugrunde, ein Netzteil für ein Computersystem, insbesondere für ein Computersystem eines Boniersystems, beispielsweise eines Funkboniersystems anzugeben, durch dessen Verwendung die erwähnten Nachteile externer Netzteile weitgehend vermieden werden.

Ein weiteres Ziel der Erfindung ist es, ein Netzteil anzugeben, welches weitere Funktionalitäten aufweisen kann, um auf diese Weise die Anzahl der Komponenten eines Computersystems zu reduzieren.

Diese Aufgabe wird durch die Merkmale des Patentanspruches 1 gelöst. Weitere erfindungsgemäße Ausgestaltungen und Vorteile gehen aus den Unteransprüchen hervor.

Demnach wird ein Netzteil für ein Computersystem, insbesondere für ein Computersystem eines Boniersystems vorgeschlagen, welches eine Mehrzahl von Ausgängen aufweist, um unterschiedliche Bauteile des Computersystems gleichzeitig mit Strom zu versorgen, wobei gemäß einer Weiterbildung der Erfindung der Ausgangsstrom und/oder die Ausgangsspannung sämtlicher oder einzelner Ausgänge einstellbar sind.

Auf diese Weise ist es möglich, mit einem erfindungsgemäßen Netzteil zumindest einen Computer, einen Bildschirm sowie Peripheriegeräte des Computersystems mit Strom zu versorgen.

Beispielsweise können für den Fall eines Funkboniersystems, sowohl das Computersystem als auch ein optional vorgesehener, mit dem Computersystem verbundener Router, zumindest eine mit dem Computersystem oder mit dem Router verbundene Basisstation, optional vorhandene Drucker sowie Ladestationen für die Mobilteile des Boniersystems mit Strom versorgt werden.

Des weiteren sind in das erfindungsgemäße Netzteil ein Netzfilter zum Vermeiden von Spannungseinbrüchen oder Spannungsspitzen sowie ein Modul zur unterbrechungsfreien Spannungsversorgung (USV), welches vorzugsweise eine unterbrechungsfreie Spannungsversorgung für einen Zeitraum in der Größenordnung von einigen Minuten gewährleistet (Micro-USV) integriert.

Dadurch entsteht der Vorteil, dass das gesamte System mit allen Komponenten und Peripheriegeräten vor Spannungsspitzen, Spannungseinbrüchen und Spannungsschwankungen sowie vor einem Systemausfall aufgrund eines Stromausfalls geschützt ist.

Durch die erfindungsgemäße Konzeption wird die Installation des Computersystems erleichtert bei einer gleichzeitigen signifikanten Reduzierung der Kosten, da lediglich ein Netzteil benötigt wird. Ferner wird durch die Verwendung lediglich eines Netzteils eine höhere Effizienz für das System erreicht werden, die zu einer geringeren Belastung des Stromnetzes und somit zu einer Stromkostenersparnis sowie zu einer geringeren Belastung der Umwelt beiträgt.

Das erfindungsgemäße Netzteil kann vorzugsweise als Netzteil eines Boniersystems für die Gastronomie oder für weitere Bereiche mit der Notwendigkeit, Produkte oder Dienstleistungen zu bonieren, dienen. Beispielsweise kann das hier vorgestellte Netzteil in Computersystemen in Tankstellen, Stadien, Messen, Hotels, Einzelhandelsgeschäften, Kinos etc. eingesetzt werden.

Im Rahmen einer Weiterbildung der Erfindung wird vorgeschlagen, dass in das Netzteil ein Netzwerk-Router integriert ist. Ferner kann gemäß der Erfindung vorgesehen sein, dass das Netzteil einen Prozessor, ein Betriebssystem und Speichermittel aufweist, wodurch mittels des Netzteils beispielsweise eine Datensicherung durchgeführt werden kann.

Hierbei kann ein gemäß der Erfindung einen Prozessor, ein Betriebssystem und Speichermittel aufweisendes Netzteil auch Funktionalitäten des Computersystems übernehmen bzw. das Computersystem unterstützen und selbst Applikationen, welche im Arbeitsumfeld notwendig sind, ausführen. Beispielsweise kann bei einem Funkbonierssystem die Steuerung des Funkboniersystems, der Schankanlagen, der Drucker, der POS Terminals (Point of Sale Terminals) und/oder weiterer Komponenten vollständig oder teilweise vom Netzteil übernommen werden.

Zu diesem Zweck ist das Netzteil mit dem Computersystem und/oder mit Peripheriekomponenten wie beispielsweise mit einem Mobilteil eines Boniersystems zum Austausch von Daten verbindbar.

Die Verbindung kann als Kabelverbindung, beispielsweise als USB-, Netzwerk- oder serielle Verbindung ausgeführt sein. Alternativ oder zusätzlich dazu kann das erfindungsgemäße Netzteil mit dem Computersystem und/oder mit Peripheriegeräten des Computersystems drahtlos verbindbar ausgeführt sein. Die drahtlose Verbindung kann beispielsweise über WIFI, W-USB (wireless-USB), Bluetooth®, oder Funk in verschiedenen Frequenzen realisiert sein.

Ferner kann das erfindungsgemäß ausgeführte Netzteil einen Ein/Aus-Schalter, einen Schalter zur Aktivierung der Datensicherungsfunktion und/oder einen vorzugsweise frei programmierbaren Multifunktionsschalter aufweisen. Zudem kann vorgesehen sein, dass das Netzteil mittels einer Fernbedienung, beispielsweise mittels eines entsprechend ausgeführten Mobilteils eines Boniersystems betätigbar ist.

Gemäß der Erfindung kann der Multifunktionsschalter in einem Computersystem einer Tankstelle dazu verwendet werden, um eine Zapfsäule freizuschalten; für den Fall des Einsatzes des Netzteils in der Gastronomie kann der Multifunktionsschalter z.B. als Kellnerruf dienen. Ferner kann für den Fall des Einsatzes des Netzteils in einem Computersystem eines Einzelhandelsgeschäfts als Notruftaste dienen.

Im Rahmen einer weiteren Ausgestaltung der Erfindung kann das Netzteil als Standfuß für eine Komponente des Computersystems, beispielsweise für einen Drucker dienen, wodurch in vorteilhafter Weise ein platzsparender Aufbau des Computersystems ermöglicht wird. Die Komponente des Computersystems kann hierbei auf herkömmliche Art und Weise mit dem Netzteil verbunden werden, z.B. mittels einer Verschraubung oder durch Formschluss. Alternativ dazu kann das Netzteil als "Dockingstation" ausgeführt sein, was die Anzahl der erforderlichen Kabel reduziert.

Durch die erfindungsgemäße Konzeption wird ein Netzteil zur Verfügung gestellt, durch dessen Verwendung die Notwendigkeit mehrerer Netzteile für ein Computersystem und dessen Peripheriekomponenten entfällt. Des weiteren kann je nach Ausführungsform des erfindungsgemäßen Netzteils die Notwendigkeit eines separaten Netzwerk-Routers sowie einer separaten, zusätzlichen Einrichtung zur Datensicherung entfallen. Ein weiterer Vorteil des erfindungsgemäßen Netzteils besteht darin, dass keine zusätzlichen Bauteile zur Spannungsstabilisierung und zur unterbrechungsfreien Stromversorgung erforderlich sind, da diese Bauteile bzw. die entsprechenden Module in vorteilhafter Weise in das Netzteil integriert sind. Zudem wird durch den optionalen, frei programmierbaren Multifunktionsschalter die Flexibilität des Benutzers erhöht.

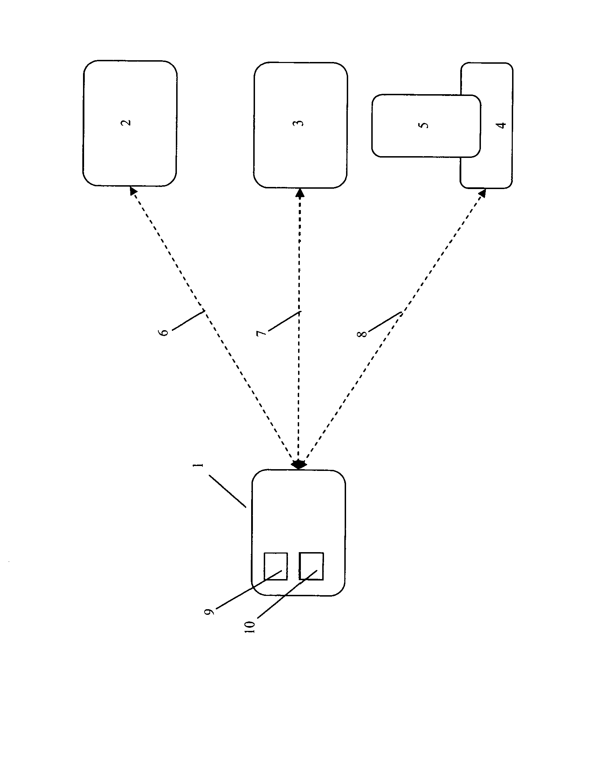

Die Erfindung wird im folgenden anhand der beigefügten Figur, welche ein erfindungsgemäß ausgeführtes Netzteil sowie die Komponenten eines Boniersystems darstellt, beispielhaft näher erläutert.

In der beigefügten Figur ist ein gemäß der Erfindung ausgeführtes Netzteil mit dem Bezugszeichen 1 versehen. Es weist mehrere Ausgänge auf, um ein Computersystem 2 eines Boniersystems umfassend einen Computer und einen Bildschirm sowie einen Drucker 3 sowie eine Ladestation 4 für ein Mobilteil 5 des Boniersystems mit Strom zu versorgen.

In vorteilhafter Weise sind der Ausgangsstrom und die Ausgangsspannung sämtlicher oder einzelner Ausgänge 6, 7, 8 des erfindungsgemäßen Netzteils 1 einstellbar, wodurch eine Anpassung an unterschiedliche Gerätetypen ermöglicht wird.

Des weiteren sind in das erfindungsgemäße Netzteil 1 ein Netzfilter 9 zum Vermeiden von Spannungseinbrüchen und Spannungsspitzen sowie ein Modul 10 zur unterbrechungsfreien Spannungsversorgung (USV) integriert, wobei das Modul zur unterbrechungsfreien Spannungsversorgung (USV) vorzugsweise eine unterbrechungsfreie Spannungsversorgung für einen Zeitraum in der Größenordnung von einer oder einigen Minuten gewährleistet (Micro-USV). Diese Module sind in der Figur durch die gestrichelten Rechtecke 9, 10 angedeutet.

## Patentansprüche

1. Netzteil (1) für ein Computersystem (2), insbesondere für ein Computersystem (2) eines Boniersystems, **dadurch gekennzeichnet, dass** es eine Mehrzahl von Ausgängen (7,6, 7, 8) aufweist, um unterschiedliche Bauteile des Computersystems (2) gleichzeitig mit Strom zu versorgen und dass in das Netzteil (1) ein Netzfilter (9) zum Vermeiden von Spannungseinbrüchen und Spannungsspitzen und ein Modul (10) zur unterbrechungsfreien Spannungsversorgung (USV) integriert sind.

2. Netzteil (1) für ein Computersystem (2), nach Anspruch 1, **dadurch gekennzeichnet, dass** das Modul (10) zur unterbrechungsfreien Spannungsversorgung (USV) als Modul ausgeführt ist, das eine unterbrechungsfreie Spannungsversorgung für einen Zeitraum in der Größenordnung von einigen Minuten gewährleistet.

3. Netzteil (1) für ein Computersystem (2), nach Anspruch 1 oder 2, **dadurch gekennzeichnet, dass** der Ausgangsstrom und/oder die Ausgangsspannung sämtlicher oder einzelner Ausgänge (6, 7, 8)einstellbar sind.

4. Netzteil (1) für ein Computersystem (2), nach Anspruch 1, 2 oder 3, **dadurch gekennzeichnet, dass** in das Netzteil (1) ein Netzwerk-Router integriert ist.

5. Netzteil (1) für ein Computersystem (2), nach einem der vorangehenden Ansprüche, **dadurch gekennzeichnet, dass** es mit dem Computersystem (2) und/oder mit Peripheriekomponenten des Computersystems (2) zum Austausch von Daten verbindbar ist.

6. Netzteil (1) für ein Computersystem (2), nach Anspruch 5, **dadurch gekennzeichnet, dass** die Verbindung des Netzteils (1) mit dem Computersystem (2) und/oder mit Peripheriekomponenten des Computersystems (2) zum Austausch von Daten als Kabelverbindung und/oder als drahtlose Verbindung ausgeführt ist.

7. Netzteil (1) für ein Computersystem (2), nach Anspruch 6, **dadurch gekennzeichnet, dass** die drahtlose Verbindung über WIFI, W-USB (wireless-USB), Bluetooth® oder Funk in verschiedenen Frequenzen realisiert ist.

8. Netzteil (1) für ein Computersystem (2), nach einem der vorangehenden Ansprüche 4 bis 7, **dadurch gekennzeichnet dass** das Netzteil (1) einen Prozessor, ein Betriebssystem und Speichermittel aufweist, wodurch eine Datensicherung durchführbar ist und Funktionalitäten des Computersystems (2) übernommen werden können.

9. Netzteil (1) für ein Computersystem (2), nach einem der vorangehenden Ansprüche, **dadurch gekennzeichnet, dass** es einen Ein/Aus-Schalter, einen Schalter zur Aktivierung der Datensicherungsfunktion und/oder einen frei programmierbaren Multifunktionsschalter aufweist.

10. Netzteil (1) für ein Computersystem (2), nach einem der vorangehenden Ansprüche, **dadurch gekennzeichnet, dass** es mittels einer Fernbedienung betätigbar ist, wobei für den Fall eines Boniersystems ein entsprechend ausgeführtes Mobilteil als Fernbedienung dient.

## Geänderte Patentansprüche

### Geänderte Patentansprüche gemäss Regel 137(2) EPÜ.

**1.** Externes Netzteil (1) für ein Computersystem (2), insbesondere für ein Computersystem (2) eines Boniersystems, **dadurch gekennzeichnet, dass** es eine Mehrzahl von Ausgängen (7,6, 7, 8) aufweist, um unterschiedliche Bauteile des Computersystems (2) gleichzeitig mit Strom zu versorgen, dass in das Netzteil (1) ein Netzfilter (9) zum Vermeiden von Spannungseinbrüchen und Spannungsspitzen und ein Modul (10) zur unterbrechungsfreien Spannungsversorgung (USV) integriert sind und dass der Ausgangsstrom und/oder die Ausgangsspannung sämtlicher oder einzelner Ausgänge (6, 7, 8) einstellbar sind.

**2.** Netzteil (1) für ein Computersystem (2), nach Anspruch 1, **dadurch gekennzeichnet, dass** das Modul (10) zur unterbrechungsfreien Spannungsversorgung (USV) als Modul ausgeführt ist, das eine unterbrechungsfreie Spannungsversorgung für einen Zeitraum in der Größenordnung von einigen Minuten gewährleistet.

**3.** Netzteil (1) für ein Computersystem (2), nach Anspruch 1 oder 2, **dadurch gekennzeichnet, dass** in das Netzteil (1) ein Netzwerk-Router integriert ist.

**4.** Netzteil (1) für ein Computersystem (2), nach einem der vorangehenden Ansprüche, **dadurch gekennzeichnet, dass** es mit dem Computersystem (2) und/oder mit Peripheriekomponenten des Computersystems (2) zum Austausch von Daten verbindbar ist.

**5.** Netzteil (1) für ein Computersystem (2), nach Anspruch 4, **dadurch gekennzeichnet, dass** die Verbindung des Netzteils (1) mit dem Computersystem (2) und/oder mit Peripheriekomponenten des Computersystems (2) zum Austausch von Daten als Kabelverbindung und/oder als drahtlose Verbindung ausgeführt ist.

**6.** Netzteil (1) für ein Computersystem (2), nach Anspruch 5, **dadurch gekennzeichnet, dass** die drahtlose Verbindung über WIFI, W-USB (wireless-USB), Bluetooth® oder Funk in verschiedenen Frequenzen realisiert ist.

**7.** Netzteil (1) für ein Computersystem (2), nach einem der vorangehenden Ansprüche 3 bis 6, **dadurch gekennzeichnet, dass** das Netzteil (1) einen Prozessor, ein Betriebssystem und Speichermittel aufweist, wodurch eine Datensicherung durchführbar ist und Funktionalitäten des Computersystems (2) übernommen werden können.

**8.** Netzteil (1) für ein Computersystem (2), nach einem der vorangehenden Ansprüche, **dadurch gekennzeichnet, dass** es einen Ein/Aus-Schalter, einen Schalter zur Aktivierung der Datensicherungsfunktion und/oder einen frei programmierbaren Multifunktionsschalter aufweist.

**9.** Netzteil (1) für ein Computersystem (2), nach einem der vorangehenden Ansprüche, **dadurch gekennzeichnet, dass** es mittels einer Fernbedienung betätigbar ist, wobei für den Fall eines Boniersystems ein entsprechend ausgeführtes Mobilteil als Fernbedienung dient.
